# EUROPÄISCHE PATENTSCHRIFT

(11) **EP 1 292 470 B1**
(45) Veröffentlichungstag und Bekanntmachung des Hinweises auf die Patenterteilung: **07.06.2006**
(21) Anmeldenummer: 01947191.1
(22) Anmeldetag: 08.06.2001
(51) Int. Cl.: B60R 21/26

(54) **HYBRIDGASGENERATOR, INSBESONDERE ZUM BEFÜLLEN EINES GASSACKS**
HYBRID-GAS GENERATOR, IN PARTICULAR FOR FILLING A GAS BAG
GENERATEUR A GAZ HYBRIDE PARTICULIEREMENT DESTINE AU REMPLISSAGE D'UNE POCHE DE GAZ

(30) Priorität: 09.06.2000 DE 10028169
(43) Veröffentlichungstag der Anmeldung: 19.03.2003
(73) Patentinhaber: Lell, Peter, Dr., 85368 Moosburg (DE)
(72) Erfinder: Lell, Peter, Dr., 85368 Moosburg (DE)
(74) Vertreter: Eder, Eugen
(86) Internationale Anmeldenummer: PCT/DE2001/002135
(87) Internationale Veröffentlichungsnummer: WO 2001/094161

(56) Entgegenhaltungen:
- EP-A- 0 805 071
- DE-A- 19 602 009
- GB-A- 2 264 772
- US-A- 6 010 153

## Beschreibung

Die Erfindung betrifft einen Hybrid-Gasgenerator, insbesondere zum Befüllen eines Gassacks, beispielsweise eines Airbags für ein Kfz.

Hybrid-Gasgeneratoren sind in vielfältigen Ausführungsformen bekannt. Ein Hybrid-Gasgenerator wird charakterisiert durch einen Gas erzeugenden Stoff, meist in Form eines Feststoffs in Form einer in einer Brennkammer vorgesehenen pyrotechnischen Treibladung und durch einen Gasbehälter, in welchem ein geeignetes Vorratsgas, beispielsweise Argon mit einem geringen Heliumanteil, enthalten ist. Das Gas erzeugende feste oder flüssige Material kann über eine Zündeinrichtung, die meist elektrisch ansteuerbar ausgebildet ist, aktiviert werden, wobei in der das Gas erzeugende Material enthaltenden Brennkammer Gas entsteht. Die üblicherweise zunächst gegenüber dem Gasbehälter abgedichtete Brennkammer ist bei bekannten Hybrid-Gasgeneratoren so ausgebildet, dass das in der Brennkammer erzeugte Gas eine Einrichtung betätigt, die die Brennkammer und den Gasbehälter öffnet, um ein Entweichen des in der Brennkammer erzeugten Gases bzw. des im Gasbehälter enthaltenen Vorratsgases zu ermöglichen. Vorzugsweise erfolgt hierbei eine Durchmischung der beiden Gasarten.

Ein derartiger Hybrid-Gasgenerator ist beispielsweise aus der DE 196 02 009 A1 bekannt. Dieser Gasgenerator umfasst eine Brennkammer mit einer Austrittsöffnung, in welcher ein Projektil angeordnet ist. Bei Überschreiten eines bestimmten Drucks innerhalb der Brennkammer wird das in der Austrittsöffnung formschlüssig oder über eine Klebeverbindung gehaltene Projektil ausgestoßen. Die Brennkammer ist koaxial innerhalb eines Gasbehälters für das Vorratsgas angeordnet, wobei der Gasbehälter in der Austrittsrichtung des Projektils eine Berstmembran aufweist, die von dem Projektil zerstört werden kann. Auf diese Weise tritt ein Gemisch aus dem innerhalb der Brennkammer erzeugten Gas und aus dem im Gasbehälter enthaltenen Vorratsgas aus der Austrittsöffnung des Gasbehälters aus.

Nachteilig bei dieser Ausführungsform eines Hybrid-Gasgenerators ist die Tatsache, dass die Reaktionszeit zwischen dem Zünden des Gas erzeugenden Materials in der Brennkammer und dem Austreten des Gases aus dem Gasbehälter nicht exakt definiert ist. Denn die Reaktionszeit ist insbesondere vom Schwellendruck abhängig, bei dem das Projektil aus der Austrittsöffnung der Brennkammer ausgestoßen wird. Eine formschlüssige Halterung des Projektils oder dessen Verklebung mit der Austrittsöffnung lässt in der Regel das Einhalten eines definierten Schwellendrucks, bei dem das Ausstoßen des Projektils erfolgt, nicht mit den geforderten engen Toleranzen zu.

Darüber hinaus ist das koaxiale Anordnen der Brennkammer innerhalb des Gasbehälters nachteilig, wenn eine schlanke, in axialer Richtung jedoch ausgedehnte Bauweise des Gasgenerators erforderlich ist.

Aus der EP 0 776 800 A2 ist ein Hybrid-Gasgenerator bekannt, bei dem der Gasbehälter mit dem Vorratsgas in axialer Richtung der Brennkammer nachgeordnet ist. Die Austrittsöffnung der Brennkammer ist wiederum mittels eines Projektils verschlossen, das vom Druck des innerhalb der Brennkammer erzeugten Gases beaufschlagt wird. Der Gasbehälter weist in der Flugrichtung des Projektils wiederum ein Berstelement auf, das bei Auftreffen des Projektils zerstört wird und die Austrittsöffnung des Gasbehälters freigibt.

Bei dieser Ausführungsform eines Hybrid-Gasgenerators ist davon auszugehen, dass die axiale Ausdehnung des Gasbehälters nur relativ gering sein darf, da andererseits keine ausreichende Treffsicherheit des Projektils auf das Berstelement gewährleistet werden darf.

In dieser Druckschrift ist zwar auch der Einsatz einer zusätzlichen Metallfolie für das Abdichten der Austrittsöffnung der Brennkammer erwähnt, wobei die Folie an der rückwärtigen Seite des Projektils vorgesehen und mit der Wandung der Brennkammer verbunden ist. Abgesehen von der Dichtfunktion sind dieser Schrift keine weiteren Hinweise betreffend die Funktion dieser Folie zu entnehmen.

Aus der DE 21 20 277 ist eine Vorrichtung zum Aufblasen von Sicherheitskissen in Fahrzeugen bekannt, wobei in einer ersten Ausführungsform ein in einem Gehäuse zur Aufnahme eines Druckgases ein verschiebbares Element gehalten ist, welches mittels einer Gas erzeugenden Ladung in Richtung auf eine Berstmembran bewegbar ist. Nach dem Bersten dieser Membran tritt das Druckgas und das von der Ladung erzeugte Gas durch die von der Berstmembran frei gegebene Auslassöffnung aus. Die Gas erzeugende Ladung ist mittels einer verdämmenden Membran abgedichtet, um eine schlagartige Druckbeaufschlagung des verschiebbaren Elements und damit ein sicheres Zerstören der Berstmembran zu gewährleisten. Infolge der Führung des Gasstroms tritt unmittelbar nach dem Öffnen der Auslassöffnung jedoch zunächst im Wesentlichen das Druckgas aus, während anschließend das mehr oder weniger gut mit dem Druckgas gemischte, von der Ladung erzeugte Gas austritt.

In einer zweiten Ausführungsform wird nach der DE 21 20 277 anstelle des verschiebbaren Elements ein in einem Führungskanal in dessen rückwärtigen Bereich gehaltenes Projektil zur Zerstörung der Berstmembran verwendet. Der Führungskanal kann, muss sich jedoch nicht bis unmittelbar vor die Berstmembran erstrecken. Der Durchmesser des Führungskanals, durch denn das von der Ladung erzeugte Heißgas bei verkürztem, d.h. sich nicht bis unmittelbar vor die Berstmembran erstreckenden Führungskanal in den Innenraum des Gasbehälters austritt, ist relativ groß im Vergleich zum Durchmesser des Gasbehälters. Problematisch bei dieser Ausführungsform ist, dass unmittelbar nach dem Zerstören der Berstmembran das von der Ladung erzeugte Heißgas ohne gute Durchmischung aus der Auslassöffnung austritt.

Ein ähnlicher Hybrid-Gasgenerator ist auch aus der DE 196 35 637 A1 bekannt, wobei entweder ein verschiebbares Stoßelement oder ein in einem Kanal geführtes Projektil zum Öffnen einer oder mehrerer Membrane verwendet wird. Bei Verwendung eines Stoßelements tritt das Heißgas jedoch nach dem Verschieben des Stoßelements und dem Öffnen der Auslassöffnung lediglich durch eine im Verhältnis zum Durchmesser des Gasbehälters relativ große Öffnung in einer Wandung des Gasbehälters in diesen ein. Der Gasstrom wird mittels der rückwärtigen Stirnseite des Stoßelements in umgelenkt um eine gewisse Durchmischung mit dem Vorratsgas zu erreichen. Bei der Verwendung eines innerhalb eines Führungskanals geführten Projektils zum Öffnen der Membran reicht der Führungskanal bis an die zu Öffnende Membran heran. Der Kanal weist Öffnungen für den Durchtritt des Vorratsgases in das Kanalinnere auf, das mit der Auslassöffnung verbunden ist und in dem auch das erzeugte Heißgas geführt wird.

Aus der US 6 010 153 ist eine Hybrid-Aufblasvorrichtung bekannt, bei der ein Vorratsgasbehälter mit einer pyrotechnischen Heizeinrichtung gekoppelt ist. An dem Ende des Gasbehälters, an dem dieser mit der Heizeinrichtung gekoppelt ist, weist der Gasbehälter eine zerstörbare Membran auf, die mittels eines Projektils, das von der Heizeinrichtung nach dem Aktivieren des darin aufgenommenen Gas erzeugenden Materials in Richtung auf die Membran beschleunigt wird, zerstört werden kann. Nach dem Zerstören tritt ein aus einem Führungskanal, aus dem das Projektil abgegeben wurde, austretender Gasstrahl zum Teil durch die Membranöffnung in den Gasbehälter ein. Zum anderen Teil wird der Gasstrahl durch die verbleibenden Randbereiche der zerstörten Membran in Richtung auf Gasauslassöffnungen umgelenkt, die im Koppelbereich des Gasbehälters mit der Heizeinrichtung in Strahlrichtung vor der Membran vorgesehen sind. Damit tritt vor allem in der Phase unmittelbar nach dem Zerstören der Membran das erzeugte Heißgas unmittelbar und ohne Durchmischung mit dem Vorratsgas aus den Auslassöffnungen aus. Dies kann zu einer Beschädigung oder Zerstörung des Objekts fuhren, das mittels dieser Aufblasvorrichtung aufgeblasen werden soll.

Ausgehend von diesem Stand der Technik liegt der Erfindung die Aufgabe zugrunde, einen Hybrid-Gasgenerator,- insbesondere zum Befüllen eines Gassacks zu schaffen, der eine hohe Funktionssicherheit und eine sehr rasche und definierte Reaktionszeit gewährleistet, wobei zur Vermeidung von Beeinträchtigungen oder Beschädigungen der Umgebung eine gute Durchmischung des Vorratsgases mit dem mittels des Gas erzeugenden Materials erzeugten Gases gewährleistet werden soll.

Die Erfindung löst diese Aufgabe mit der Merkmalskombination der beiden Alternativen des Patentanspruchs 1.

Die Erfindung geht von der Erkenntnis aus, dass eine Membran zum Verschließen der Brennkammer-Auslassöfnung so dimensioniert werden kann, dass eine Zerstörung der Membran durch die Druckbeaufschlagung des Gases in der Brennkammer innerhalb sehr enger Toleranzen um einen vorbestimmten Schwellendruck gewährleistet ist. Hierdurch erfolgt eine Druckbeaufschlagung eines Projektils, welches in einem Führungskanal vorgesehen ist, erst dann, wenn der Schwellendruck innerhalb der Brennkammer überschritten wurde. Es besteht daher nicht die Gefahr, dass das Projektil durch eine Beaufschlagung des in der Brennkammer erzeugten Gases unterhalb des Schwellendrucks aus seiner Ausgangsposition herausbewegt oder die das Projektil im Führungskanal fixierenden Kräfte beeinflusst werden. Der Einfluss aller Anzünd- bzw. Entflammungsvorgänge auf das Projektil werden damit eliminiert. Die Reaktionszeit bis zum Ausstoßen des Projektils aus dem Führungskanal abhängig vom Druckanstieg innerhalb der Brennkammer kann daher in sehr engen Grenzen eingehalten werden. Da die Lauflänge (d.h. die effektive, das Projektil bis zu seinem Austreten führende Länge des Führungskanals, welche als Lauf für das Projektil wirkt) in Verbindung mit dem Beaufschlagungsdruck im Führungskanal die Endgeschwindigkeit des Projektils festlegt, kann auch die Reaktionszeit bis zur Zerstörung der Auslassmembran des Gasbehälters exakt eingehalten werden. Die Genauigkeit der Schussbahn des Projektils kann weiter erhöht werden, wenn der Führungskanal ähnlich einem Gewehrlauf mit Zügen versehen wird.

In einer anderen Ausführungsform der Erfindung wird auf das separate Vorsehen eines Projektils in oder an der Brennkammer-Auslassöffnung bzw. im Führungskanal verzichtet. In diesem Fall wird eine Membran verwendet, die so ausgebildet ist, dass der den Querschnitt des Führungskanals verschließende Teil der Membran bei Überschreiten eines vorbestimmten Schwellendrucks des in der Brennkammer erzeugten Gases im Wesentlichen als Ganzes aus der Membran herausgebrochen wird, wobei der herausgebrochene Teil als Projektil wirkt. Der herausgebrochene Teil kann gegenüber dem übrigen Bereich der Membran verdickt sein. In jedem Fall muss gewährleistet sein, dass der herausgebrochene Teil eine solche Masse aufweist, dass die kinetische Energie dieses Projektils beim Auftreffen auf die Auslassmembran des Gasbehälters zu deren Zerstörung ausreicht.

Diese Ausführungsform weist den Vorteil einer sehr einfachen Herstellung des Hybrid-Gasgenerator auf.

Durch die Wahl des Verhältnisses des Durchmessers des Führungskanals zum Durchmesser des Gasbehälters in einem Bereich von 1/10 bis 1/5 wird erreicht, dass der aus der Brennkammer austretende Gasstrom in Form eines engen, scharf begrenzten Gasstrahls in den Gasbehälter eintritt und sich auf diese Weise eine gute Durchmischung des im Gasbehälter aufgenommenen Vorratsgases mit dem mittels des Gas erzeugenden Material erzeugten Gases ergibt.

Die Membran kann am brennkammerseitigen Ende des Führungskanals oder innerhalb des Führungskanals vorgesehen sein, wobei der Bereich des Führungskanals zwischen der Position der Membran und dem Ende des Führungskanals als Lauf zur Führung des das Projektil bildenden Teils der Membran dient. Hierdurch kann die Endgeschwindigkeit des Projektils in sehr engen Grenzen eingehalten werden.

Die Membran kann an der der Brennkammer abgewandten Stirnseite von Abscherkanten beaufschlagt sein. Hierdurch wird das Ausbrechen des Membranteils innerhalb des Querschnitts des Führungskanals als Ganzes erleichtert Auch trägt dies zu einem Herausbrechen des das Projektil bildenden Membranteils innerhalb enger Toleranzen um den gewünschten Schwellendruck bei.

Die Membran kann auch an der der Brennkammer abgewandten Stirnseite des Führungskanals vorgesehen sein.

In diesem Fall ergibt sich eine Lauflänge von Null. Diese Ausführungsfonn bietet sich daher insbesondere für kürzere Distanzen zwischen der Membran, aus welcher das Projektil herausgebrochen wird, und der zu zerstörenden Auslassmembran an. Denn in diesem Fall ist in Folge der Lauflänge von Null die Zielgenauigkeit und die Laufzeit des Projektils bis zum Auftreffen auf die Auslassmembran gegenüber den vorgenannten Ausführungsformen reduziert. Das Problem der Zielgenauigkeit kann durch das Vorsehen von Leitflächen gelöst werden, die das Projektil erforderlichen Falls in Richtung auf die zu zerstörende Auslassmembran leiten.

Nach einer Ausführungsform kann die Membran, aus welcher das Projektil herausgebrochen werden muss, mit einer entsprechenden, ringartig geschlossenen Sollbruchstelle versehen sein. Diese kann beispielsweise eine ringartig geschlossene Nut oder Kerbe sein. Bei der Ausführungsform, bei der die Membran an der der Brennkammer abgewandten Stirnseite des Führungskanals vorgesehen ist, kann die Membran mittels einer ringförmigen Schweißnaht mit der betreffenden Stirnseite des Führungskanals verbunden sein. Die Sollbruchstelle stellt in diesem Fall der innenseitige Randbereich der Schweißnaht dar. In diesem Fall ist es möglich, einen Bereich aus der Membran herauszubrechen, welcher das Projektil bildet, der größer ist als der Querschnitt des Führungskanals. Der Querschnitt des Führungskanals ist erfindungsgemäß vorzugsweise so festgelegt, dass der maximale nach dem Aktivieren des Gas erzeugenden Materials im Gasbehälter auftretende Arbeitsdruck unterhalb eines bestimmten Werts liegt, vorzugsweise unter 300 bis 400 bar.

Nach einer weiteren Ausführungsform der Erfindung kann die Auslassmembran so ausgebildet und so ausgelegt sein, dass sie auch ohne Zerstörung durch das Projektil bei Überschreiten eines kritischen Drucks des Gemischs aus Vorratsgas und erzeugtem Gas im Gasbehälter zerstört wird. Hierdurch wird die Betriebssicherheit des Gasgenerators gewährleistet, da eine Auslösung des Gasgenerators auch dann erfolgt, wenn durch eine Fehlfunktion die Auslassmembran des Gasbehälters nicht durch das Projektil zerstört wird.

Die Wandstärke des Gasbehälters kann auf den maximalen Arbeitsdruck (bei einer Zerstörung der Auslassmembran durch das Projektil) oder den kritischen Druck, bei dem eine Zerstörung der Auslassmembran erfolgt, unter Berücksichtigung einer Sicherheitsreserve ausgelegt sein. Dies führt zu einer Gewichts- und Kostenreduktion bei der Herstellung des Gasgenerators, ohne dass dadurch dessen Funktionssicherheit oder Betriebssicherheit beeinträchtigt wäre.

In der bevorzugten Ausführungsform kann der Gasbehälter rohrförmig ausgebildet sein. Der Führungskanal kann dabei in einem scheibenartigen, mit dem betreffenden Ende eines Rohrs verbundenen oder einstückig damit ausgebildeten Endstück vorgesehen sein.

Die Brennkammer kann ebenfalls rohrförmig ausgebildet sein, wobei vorzugsweise ein das Brennkammergehäuse bildender Rohrabschnitt mit dem Endstück des Gasbehälters verbunden oder einstückig damit ausgebildet ist. Hierdurch wird eine sehr schlanke Bauweise bei geringem Fertigungsaufwand erreicht.

Nach einer weiteren Ausführungsform der Erfindung kann die Brennkammer-Austrittsöffnung gegenüber den bei der Gaserzeugung entstehenden festen oder flüssigen Partikeln mittels eines Abschirmelements abgeschirmt sein. Das Abschirmelement ist in einem vorbestimmten Abstand vor der Brennkammer-Austrittsöffnung angeordnet.

Das Abschirmelement verhindert das direkte, ungebremste Austreten der festen oder flüssigen Partikel. Die Partikel können dann nur noch aus der Brenakammer-Austrittsöffnung austreten, wenn sie durch den zwangsweise umgelenkten Gasstrom mitgerissen werden.

In einer Ausführungsform der Erfindung kann das Abschirmelement siebartig oder filterartig ausgebildet sein. Hierdurch wird zumindest das Austreten von festen oder flüssigen Partikeln verhindert, die eine bestimmte Größe überschreiten.

Vorzugsweise weist das Abschirmelement einen Prallbereich auf, welcher die Brennkammer-Auslassöffnung derart abdeckt, dass ein direktes, geradliniges, ungebremstes Eintreten von festen oder flüssigen Partikeln in die Brennkammer-Auslassöffnung oder deren direktes Aufschlagen auf die Membran verhindert wird.

In einer weiteren Ausführungsform der Erfindung kann der die Brennkammer-Auslassöffnung umgebende Bereich und/oder der Prallbereich des Abschirmelements, die einem Auftreffen von festen oder flüssigen Partikeln ausgesetzt sind, aus einem Material bestehen, in welches die Partikel teilweise eindringen und gefangen bleiben und teilweise, gegebenenfalls beim Aufprall zerplatzt, davon abprallen. Hierdurch wird erreicht, dass große Partikel entweder zerkleinert werden und eine unkritische Größe erreichen oder gefangen bleiben.

Weitere Ausführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine erste Ausführungsform eines Hybrid-Gasgenerators nach der Erfindung im Längsschnitt;
- Fig. 2: vergrößerte Darstellungen des rückwärtigen (Fig. 2a) und des vorderen (Fig. 2b) Bereichs der Ausführungsform gemäß Fig. 1,
- Fig. 3: einen Längsschnitt durch einen rückwärtigen Bereich einer zweiten Ausführungsform eines Gasgenerators ohne separates Projektil und
- Fig. 4: einen Längsschnitt durch eine rückwärtigen Bereichs einer dritten Ausführungsform ohne separates Projektil.

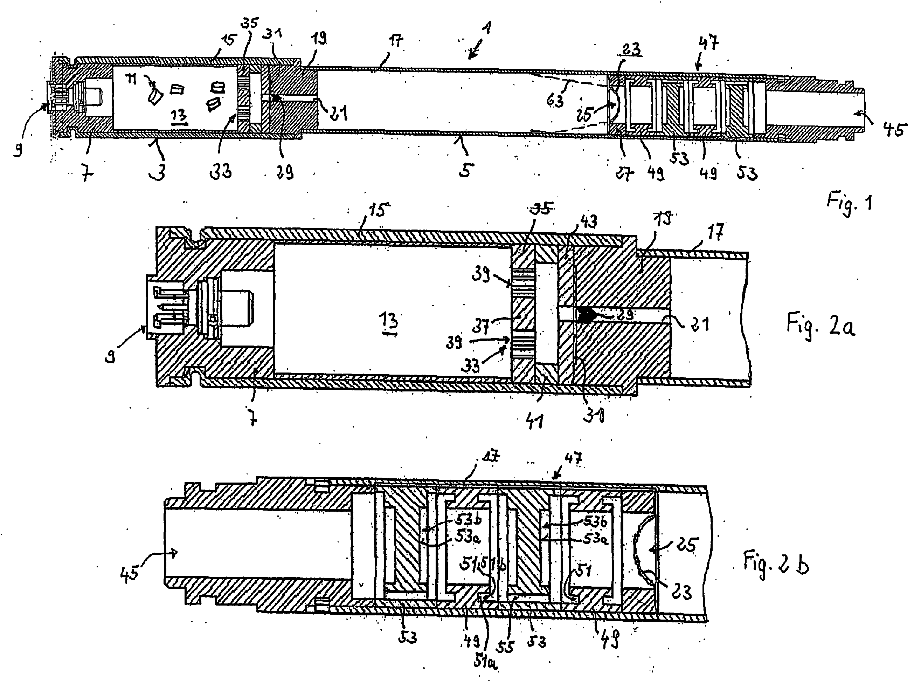

Der in Fig. 1 dargestellte Hybrid-Gasgenerator 1 umfasst eine Brennkammer 3 und einen Gasbehälter 5. Die Brennkammer 3 ist an ihrem rückwärtigen Ende mittels eines scheibenartigen Stopfens 7 verschlossen, wobei im Stopfen 7 eine Aktiviervorrichtung 9 zum Aktivieren eines Gas erzeugenden Materials 11 angeordnet ist, welches im Innenraum 13 der Brennkammer 3 enthalten ist. Die Aktiviervorrichtung 9 ist vorzugsweise als mittels eines elektrischen Signals ansteuerbarer Zünder ausgebildet. Die axial verlaufende Wandung der Brennkammer 3 ist, wie in Fig. 1 dargestellt, vorzugsweise als Rohrabschnitt 15 ausgebildet.

Der Gasbehälter 5, dessen axial verlaufende Außenwandung ebenfalls als Rohrabschnitt 17 ausgebildet sein kann, ist an seinem rückwärtigen, der Brennkammer 3 zugewandten Ende mit einem scheibenartigen Endstück 19 verbunden, in welchem, vorzugsweise in der Achse des Rohrabschnitts 17 verlaufend, ein Führungskanal 21 ausgebildet ist. Das Endstück 19 ist ebenfalls mit dem vorderen Ende des Rohrabschnitts 15 der Brennkammer 3 verbunden. Das Verbinden des Stopfens 7 und des Endstücks 19 mit den Rohrabschnitten 15 bzw. 17 kann beispielsweise durch Verschweißen erfolgen. Diese Elemente können aus Metall oder einem geeigneten Kunststoff bestehen. Anstelle des in Fig. 1 dargestellten mehrteiligen Aufbaus können die genannten Elemente selbstverständlich auch ganz oder teilweise einstückig miteinander ausgebildet sein.

Die Ausbildung der Brennkammer 3 mit einem Kunststoffgehäuse bietet den Vorteil einer einfachen und kostengünstigen Herstellbarkeit. Die Brennkammer kann auch als austauschbare Kartusche ausgebildet sein, die mit dem Gasbehälter 5 lösbar verbunden sein kann. Als Kunststoffmaterial für die vorstehend erwähnten Elemente, die aus Kunststoff bestehen können, eignet sich insbesondere PPEK oder PE. PEEK ist dabei ein äußerst hitzebeständiger Kunststoff, der jedoch relativ teuer ist. PE ist zwar auf Dauer weniger hitzebeständig, weist jedoch bei einer relativ kurzzeitigen Erhitzung einen Selbstschutzeffekt auf: Durch das Erhitzen verdampft ein Teil der Oberfläche des PE, das zudem einen relativ hohen Wasseranteil aufweist. Hierdurch entsteht ein Kühlungseffekt (Schwitzkühlung), der das Material zumindest kurzfristig vor einer Zerstörung schützt.

Im vorderen Endbereich des Gasbehälters 5 ist eine Auslassmembran 23 vorgesehen, welche eine Auslassöffnung 25 des Gasbehälters 5 dicht verschließt. Im dargestellten Ausführungsbeispiel ist die Auslassmembran 23 in einem scheibenartigen Verschlusselement 27 gehalten, welches im vorderen Endbereich des Rohrabschnitts 17 des Gasbehälters 5 angeordnet und mit diesem dicht verbunden ist. Das Verschlusselement 27 kann wiederum aus Metall oder Kunststoff bestehen und mit dem Rohrabschnitt 17 verschweißt oder einstückig mit diesem verbunden sein. Die Auslassmembran 23 ist vorzugsweise an der innenseitigen Stirnwandung des Verschlusselements 27 angeordnet und mit dieser, z.B. durch Schweißen dicht verbunden.

Im Führungskanal 21 des Endstücks 19 des Gasbehälters 5 ist bei der Ausführungsform nach Fig. 1 ein separates Projektil 29 vorgesehen. Das Projektil 29 ist vorzugsweise durch geringe Reibungskräfte im Führungskanal 21 gehalten, so dass es bei Lageänderungen des Gasgenerators 1 nicht aus dem Führungskanal 21 herausfallen kann. An der rückwärtigen Stirnseite des Endstücks 19 ist eine Brennkammer-Auslassmembran 31 vorgesehen. Diese kann aus Metall oder Kunststoff bestehen und ist mit dem aus Metall oder Kunststoff bestehenden Endstück vorzugsweise durch eine ringförmige Schweißnaht, die sich um den Querschnitt des Führungskanals 21 herum erstreckt, dicht verbunden. Im Innenraum 13 der Brennkammer 3 ist vor der durch die Brennkammer-Auslassmembran 31 verschlossenen Öffnung des Führungskanals 21 eine erste Partikelrückhalteeinrichtung 33 vorgesehen. Die Partikelrückhalteeinrichtung 33 umfasst ein scheibenartiges Abschirmelement 35, welches eine Prallbereich 37 aufweist. Der Prallbereich 37 deckt die durch die Membran 31 abgedeckte Öffnung des Führungskanals 21 ab, so dass ein direktes Eindringen von festen oder flüssigen Partikeln, die bei der Gaserzeugung im Innenraum 13 der Brennkammer 3 entstehen, in den Führungskanal 21 bzw. ein Auftreffen der Partikel auf die Membran 31 im Bereich der Öffnung des Führungskanals 21 verhindert wird. Um einen Durchtritt des in der Brennkammer 3 erzeugten Gases durch den Führungskanal 21 in den Gasbehälter 5 zu ermöglichen, weist das Abschirmelement Durchgangsöffnungen 39 auf und ist in einem vorbestimmten Abstand vor der Membran 31 bzw. der Öffnung des Führungskanals 21 angeordnet. Durch die endliche Dicke des Abschirmelements 5 bzw. die endliche Länge der Durchgangsöffnungen 39 kann der durch sie hindurchtretende Partikelstrom nicht direkt im Bereich der Öffnung des Führungskanals 21 auf die Membran 31 auftreffen oder in den Führungskanal 21 eintreten. Die Durchgangsöffnungen können im Querschnitt so klein gewählt sein, dass gleichzeitig eine Filterfunktion erreicht wird.

Um einen definierten Abstand zwischen dem Abschirmelement 35 und dem Endstück 19 zu erreichen, werden bei der in den Fig. 1 und 2 dargestellten Ausführungsform ein Abstandsring 41 und eine Prallplatte 43 verwendet, welche eine mit dem Führungskanal 21 im Endstück 19 fluchtende zentrische Öffnung aufweist.

Die Prallplatte 43 besteht aus einem Material, welches die durch die Durchgangsöffnungen 39 des Abschirmelements 35 hindurch tretenden Partikel beim Auftreffen zerplatzen lässt, so dass diese eine unkritische Größe erreichen, oder das Material ist so beschaffen, dass diejenigen Teilchen, die nicht zerplatzen, in die Prallplatte 43 eindringen und in ihr gefangen bleiben.

Die Partikelrückhalteeinrichtung 33 gewährleistet daher, dass die Membran 31 nicht vor Erreichen eines bestimmten Schwellendrucks durch feste oder flüssige Partikel zerstört wird. Des Weiteren verhindert die Partikelrückhalteeinrichtung 33 das Hindurchtreten von hochenergetischen Partikeln durch den Führungskanal 21.

Im Folgenden wird kurz die Funktion des in den Fig. 1 und 2 dargestellten Hybrid-Gasgenerator erläutert: Nach dem Aktivieren der Aktiviervorrichtung 9 bzw. dem Zünden eines entsprechenden Zünders wird das im Innenraum 13 der Brennkammer 3 enthaltene Gas erzeugende Material 11 aktiviert. Durch die Gaserzeugung erfolgt im Innenraum 13 ein Druckanstieg. Die Brennkammer-Auslassmembran 31 ist hinsichtlich ihrer Dicke und ihres Materials in Abhängigkeit vom Querschnitt des Führungskanals 21 so dimensioniert, dass bei einem vorgegebenen Schwellendruck innerhalb sehr enger Toleranzen ein Zerstören der Membran im Bereich des Querschnitts des Führungskanals 21 erfolgt. Hierbei kann es sich um ein einfaches Aufplatzen der Membran 31 handeln. Das im Führungskanal 21 gehaltene Projektil 29 wird nach dem Zerstören der Membran 31 plötzlich mit dem entsprechenden Schwellendruck beaufschlagt. Das Projektil 29 wird so extrem definiert beschleunigt und über die gesamte Lauflänge im Führungskanal 21 bis zu seinem Austreten aus dem Führungskanal geführt. Die Lauflänge ist dabei als diejenige Länge des Führungskanals 21 definiert, die das Projektil von seiner Ausgangsposition im Führungskanal 21 bis zu seinem Austreten aus dem Führungskanal 21 durchläuft. Die Lauflänge bestimmt neben anderen Faktoren (Beaufschlagungsdruck, Masse des Projektils, etc.) die Endgeschwindigkeit des Projektils 29 beim Verlassen des Führungskanals 21.

Um eine optimale Beschleunigung des Projektils 29 zu gewährleisten, ist dieses vorzugsweise so ausgebildet, dass die Aussenwandung des Projektils 29 im Wesentlichen dicht mit der Innenwandung des Führungskanals 21 abschließt. Hierzu kann das Projektil 29 in seinem rückwärtigen Bereich eine Ausnehmung aufweisen, so dass die verbleibenden Aussenwandungen im Bereich der Ausnehmung mit dem Druck des erzeugten Gases beaufschlagt und gegen die Innenwandung des Führungskanals 21 gedrückt werden. Hierdurch ergibt sich eine abdichtende Wirkung, ohne dass das Projektil in Folge unzulässig hoher Reibungskräfte wesentlich im Führungskanal 21 gebremst wird und ohne dass es einer zusätzlichen Dichteinrichtung oder eines zusätzlichen Dichtmittels, wie beispielsweise eines O-Rings für das Projektil bedürfte.

Das Projektil 29 wird mit einer vorbestimmten Endgeschwindigkeit aus dem Führungskanal 21 ausgestoßen und fliegt in Richtung auf die zerstörbare Auslassmembran 23, welche es beim Auftreffen zerstört. Demzufolge tritt ein Gemisch des im Gasbehälter 5 enthaltenen Vorratsgases und des in der Brennkammer 3 erzeugten Gases, welches nach dem Austreten des Projektils 29 aus dem Führungskanal 21 in den Gasbehälter 5 übertritt, aus der Austrittsöffnung 45 des Gasgenerators 1 aus. Der Verlauf des Massenstroms des aus der Austrittsöffnung 45 austretenden Gasgemischs ist abhängig von den Druckverhältnissen im Innenraum des Gasbehälters 5, die ihrerseits vom Strömungswiderstand zwischen der Auslassöffnung 25 des Gasbehälters 5 und der Austrittsöffnung 45 des Gasgenerators 1 sowie dem durch den Führungskanal 21 in den Innenraum des Gasbehälters 5 eintretenden Massestrom des erzeugten Gases abhängen. Der maximale Druck in der Brennkammer 3 kann z.B. 700 bis 1.500 bar betragen und der maximale Druck im Innenraum des Gasbehälters 5 ca. 300 bis 400 bar. Demzufolge ist es möglich, die Aussenwandung des Gasbehälters 5 deutlich schwächer zu dimensionieren als die Aussenwandung der Brennkammer 3.

Aus Sicherheitsgründen kann die Auslassmembran 23 so dimensioniert sein, dass sie bei Überschreiten eines vorbestimmten kritischen Drucks zerstört wird und die Auslassöffnung 25 freigibt. Eine derartige Situation kann z.B. bei einer Fehlfunktion des Gasgenerators oder einer falschen Montage des Generators ohne das Projektil 29 entstehen. Der kritische Druck, bei dem die Membran 23 zerstört wird, liegt sinnvoller Weise über dem normalen maximalen Arbeitsdruck, der bei einer korrekten Funktionsweise des Gasgenerators im Inneren des Gasbehälters 5 entsteht.

Im vorderen Bereich des Gasgenerators 1 ist eine zweite Partikelrückhalteeinrichtung 47 vorgesehen. Diese umfasst mehrere scheibenförmige Elemente, die jeweils ein Umlenken des austretenden Gasstroms bewirken. Im dargestellten Ausführungsbeispiel ist die zweite Partikelrückhalteeinrichtung aus zwei verschiedenen Typen von scheibenartigen Elementen ausgebildet. Ein erster Typ der scheibenartigen Elemente 49 ist im Wesentlichen durch einen Ring gebildet, dessen zentrische Durchbruchsöffnung 49a ein axiales Hindurchtreten des Gasstroms einschließlich der darin noch befindlichen Partikel gestattet. In den stirnseitigen Wandungen der scheibenartigen Elemente 49 sind Ringnuten 51 ausgebildet. Wie nachstehend erläutert, bilden die Ringnuten 51 Auffangausnehmungen für darin auftreffende feste oder flüssige Partikel. Der zweite Typ 53 der scheibenartigen Elemente weist keinen zentrischen Durchbruch auf, sondern mehrere radial außen liegende Durchbrüche 55. In der Draufsicht eines scheibenartigen Elements 53 können die radial äußeren Durchbrüche als mehrere auf einer Kreislinie angeordnete Bohrungen ausgebildet sein.

Wie in Fig. 1 und 2b dargestellt, tritt der Gasstrom nach dem Zerstören der Auslassmembran 23 zunächst durch ein scheibenartiges Element 49 bzw. dessen zentrische Durchbruchsöffnung 49a hindurch und trifft dann auf den zentrischen Bereich eines danach angeordneten scheibenartigen Elements 53, welches nur radial nach außen versetzte Durchbrüche 55 aufweist. Dieses erste scheibenartige Element 55 dient gleichzeitig für das Auffangen des Projektils 29.

Der Gasstrom wird daher aus seinem zunächst im Wesentlichen axial verlaufenden Strom in im Wesentlichen radiale Richtung umgelenkt und tritt durch die radial nach außen versetzten Durchbrüche 55 des scheibenartigen Elements 53 hindurch. Der zentrische Bereich der scheibenartigen Elemente 53 kann dabei wiederum als Prallbereich 53a ausgebildet sein, wie dies in Verbindung mit der Prallplatte 43 bereits beschrieben wurde. Des Weiteren kann der Prallbereich 53a am Boden einer Ausnehmung vorgesehen sein, so dass die Ausnehmung als Auffangbereich 53b wirkt, in dem sich Partikel ablagern können. Nach dem Hindurchtreten durch die Durchbrüche 55 des scheibenartigen Elements 53 muss der Gasstrom erneut (zweifach) umgelenkt werden, um wiederum in im Wesentlichen axialer Richtung durch die zentrische Durchbruchsöffnung 49a des zweiten scheibenartigen Elements 49 hindurch treten zu können. Der Querschnitt der Durchbrüche 55 kann so gewählt werden, dass gleichzeitig eine Filterfunktion erreicht wird. Bei dem Umlenken des Gasstroms aus der parallel-axialen Richtung bei seinem Hindurchtreten durch die Durchbrüche 55 des scheibenartigen Elements 53 in eine im Wesentlichen radial einwärts gerichtete Richtung werden Partikel in der Ringnut 51 des zweiten scheibenartigen Elements 49 aufgefangen, da die Partikel, zumindest wenn sie eine gewisse Masse überschreiten, der raschen Umlenkung des Gasstroms nicht folgen können. Der Innenraum der Ringnut 51 dient daher als Auffangbereich 51a. Zumindest die stirnseitige Innenwandung der Ringnut 51 bzw. das gesamte Element 49 kann wiederum aus einem Material bestehen, das ein Eindringen hochenergetischer Partikel erlaubt und diese gefangen hält oder die auftreffenden Partikel zerplatzen lässt. Die Ringnut 51 bildet somit gleichzeitig einen Prallbereich 51a und einen Auffangbereich 51b. Anstelle einer Ringnut 51, die für alle Durchbrüche 55 als gemeinsamer Prallbereich bzw. Auffangbereich wirkt, können selbstverständlich jedem Durchbruch oder jeweils mehreren Durchbrüchen separate Prallbereiche oder Auffangbereiche zugeordnet sein.

Bei der in Fig. 1 und 2 dargestellten Ausführungsform erfolgt ein erneutes Umlenken des das zweite scheibenartige Element 49 zentrisch durchströmenden Gasstroms derart, dass dieser durch die radial außen liegenden Durchbrüche 55 des zweiten scheibenartigen Elements 53 hindurch treten kann. Der zentrische Bereich des Elements 53 dient wiederum als Prallbereich 53a und Auffangbereich 53b. Nach dem Hindurchtreten durch die Durchbrüche 55 des zweiten scheibenartigen Elements 53 verlässt der Gasstrom durch die zentrische Auslassöffnung 45 im vorderen Bereich des Gasgenerators 1. Dieser kann so ausgebildet sein, dass darin ein aufzublasender Gassack, z.B. ein Airbag, befestigt werden kann.

Anstelle großer zentrischer Durchbrüche in den scheibenartigen Elementen 49 können in diesem Bereich auch eine Vielzahl von kleinen Durchbrüchen vorgesehen sein, die als Filter wirken oder im zentrischen Durchbruch kann ein siebartiges Element eingesetzt sein.

Bei der in den Fig. 1 und 2 dargestellten Ausführungsform einer Partikelrückhalteeinrichtung 47 ergibt sich der Vorteil, dass diese aus nur zwei unterschiedlichen Bauteilen (die scheibenartigen Elemente 49 und 53) aufgebaut ist. Dies führt neben dem Vorteil einer kostengünstigen Realisierung zu einer einfachen und fehlerunanfälligen Montage.

Selbstverständlich kann die Partikelrückhalteeinrichtung 47 jedoch, ebenso wie die Partikelrückhalteeinrichtung 33, auch auf beliebige andere Weisen realisiert werden, wobei in jedem Fall wenigstens eine Umlenkung des die Partikel enthaltenden Gasstroms und wenigstens ein Prallbereich und/oder Aufnahmebereich erforderlich ist, der im Wesentlichen in der verlängerten Richtung der Gasströmung vor der Umlenkung vorgesehen ist.

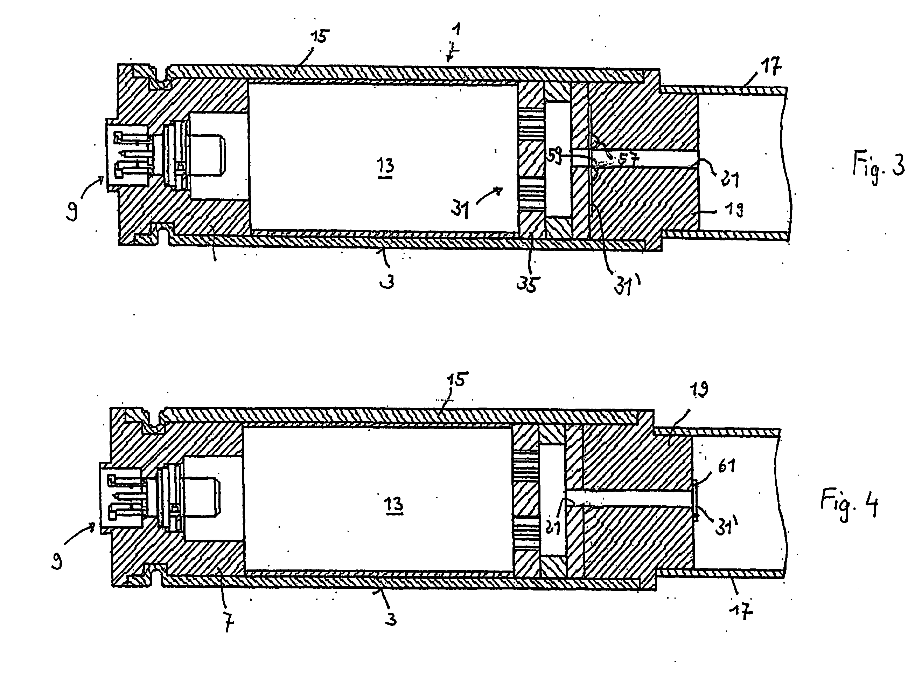

Fig. 3 zeigt einen Längsschnitt durch einen rückwärtigen Bereich einer weiteren Ausführung eines Gasgenerators nach der Erfindung, welche in weiten Teilen mit der in Fig. 1 und 2 dargestellten Ausführungsform identisch ist. Für gleiche Teile werden daher gleiche Bezugszeichen verwendet.

Im Folgenden werden der Einfachheit halber lediglich unterschiedliche Teile und unterschiedliche Funktionen dieser Ausführungsform näher erläutert.

Bei der in Fig. 3 dargestellten Ausführungsform wurde auf ein separates Projektil (29 in Fig. 1 und Fig. 2a) verzichtet. Anstelle eines separaten Projektils ist bei dieser Ausführungsform eine den Führungskanal 21 brennkammerseitig abdichtende Membran 31' vorgesehen. Die Membran 31' ist so ausgebildet, dass bei Überschreiten eines vorbestimmten Schwellendrucks im Innenraum 13 der Brennkammer 3 im Wesentlichen der gesamte, den Querschnitt des Führungskanals verschließende Teil der Membran als ganzes aus der Membran herausgebrochen wird und als Projektil wirkt. Die Membran 31' kann hierzu abhängig von Material und gewünschtem Schwellendruck eine vorbestimmte Dicke aufweisen. Die Kanten des Endstücks 19, die die Querschnittsöffnung des Führungskanals 21 begrenzen, können dabei scharfkantig ausgebildet sein, so dass diese ein Abscheren des den Querschnitt des Führungskanals 21 abdeckenden Bereichs der Membran 31' begünstigen. Die Kante der Öffnung des Führungskanals 21 kann hierzu mit einem spitzen Winkel von weniger als 90° ausgebildet sein. Hierzu kann beispielsweise eine umlaufende Ringnut 57 in unmittelbarer Nachbarschaft auf der Stirnseite des Endstücks 19 ausgebildet sein, wodurch sich eine Abscherkante 59 mit spitzem Winkel ergibt.

Durch das Herausbrechen des den Führungskanal 21 verschließenden Teils der Membran 31' als Ganzes kann dieses Teil als Projektil dienen, welches in der vorbeschriebenen Weise durch die Druckbeaufschlagung im Führungskanal 21 geführt beschleunigt wird. Die weitere Funktionsweise dieser Ausführungsform ist mit der vorstehend erläuterten Funktionsweise der Ausführungsform in Fig. 1 identisch. Die Ausführungsform gemäß Fig. 3 weist den Vorteil eines geringeren Herstellungsaufwands auf.

Selbstverständlich kann die Membran 31' nicht nur an der brennkammerseitigen Stirnseite des Endstücks 19 vorgesehen sein, sondern auch innerhalb des Elements 19. Dies kann hierzu beispielsweise aus zwei Scheiben bestehen, die die Membran 31' zwischen sich einschließen.

Die weitere in Fig. 4 dargestellte Ausführungsform unterscheidet sich von der Ausführungsform gemäß Fig. 3 dadurch, dass die Membran 31' an der der Brennkammer abgwandten Stirnseite des Endstücks 19 vorgesehen ist. Auch in diesem Fall kann das Verbinden der Membran 31' mit dem Endstück 19 durch das Vorsehen einer ringförmigen Schweißnaht 61 erfolgen. Die Wirkungsweise der Ausführungsform gemäß Fig. 4 unterscheidet sich von der Ausführungsform gemäß Fig. 3 dadurch, dass bei einem Erzeugen von Gas im Innenraum 13 der Brennkammer 3 die Membran 31' nicht nur im Bereich des Öffnungsquerschnitts des Führungskanals 21 ausgebrochen wird, sondern der gesamte im Inneren der ringförmigen Schweißnaht 61 liegende Bereich. Dieser Bereich kann größer sein als der Öffnungsquerschnitt des Führungskanals 21. Bei dieser Ausführungsform erfolgt jedoch keine Führung des als Ganzes herausgebrochenen Teils der Membran 31', d.h. die Lauflänge ist in diesem Fall auf Null reduziert. Demzufolge ist die Zielgenauigkeit und Endgeschwindigkeit des Projektils in diesem Fall geringer als bei der Ausführungsform gemäß Fig. 3. Der Nachteil einer genaueren Zielgenauigkeit kann bei dieser Ausführungsform durch Leitflächen 63 (angedeutet in Fig. 1) behoben werden, die gewährleisten, dass ein Projektil mit "falscher Richtung" in Richtung auf die zu zerstörende Membran 23 geführt wird. Die Leitflächen 63 können durch ein nicht näher dargestelltes ringförmiges Element innerhalb des Gasbehälters 5 realisiert werden, welches einen sich konisch in Richtung auf die Membran 23 verjüngenden zentrischen Durchbruch aufweist.

Der Führungskanal 21 bzw. dessen Länge dient in diesem Fall (wie auch bei den vorstehend beschriebenen Ausführungsformen) einem "Entkoppeln" der Rückwirkungen der dynamischen Druckverhältnisse im Innenraum des Gasbehälters 5 und im Innenraum 13 der Brennkammer 3. Die Länge des Führungskanals wird dabei vorzugsweise größer als der Durchmesser des Querschnitts und kleiner als das ca. fünffache des Durchmessers des Querschnitts gewählt. Auf diese Weise wird erreicht, dass bei der Entwicklung eines Gasgenerators für ganz bestimmte Anwendungszwecke eine einfache, rechnergestützte Simulation möglich ist, ohne dass eine Vielzahl von Experimenten erforderlich wäre.

Ergänzend sei an dieser Stelle erwähnt, dass die Lauflänge für ein im Führungskanal 21 geführtes Projektil (separates Projektil 29 oder "herausgebrochenes" Projektil) zumindest das Einfache des Projektildurchmesser betragen soll, um eine ausreichende Führung zu erreichen.

Der Führungskanal oder Lauf bewirkt bei dem erfindungsgemäßen Gasgenerator bei entsprechender Dimensionierung zusätzlich, dass ein enger, scharf begrenzter Gasstrahl entsteht, der aus der Brennkammer in den Gasbehälter eintritt. Durch geeignete Dimensionierung des Führungskanals kann die Länge des keulenartigen Strahls und dessen Durchmesser sowie der Öffnungswinkel des Strahls so bestimmt werden, dass sich eine gute Durchmischung des aus der Brennkammer austretenden Gases mit dem im Gasbehälter enthaltenen Vorratsgas ergibt Das Verhältnis des Durchmessers bzw. Querschnitts des Führungskanal zum Durchmesser bzw. Querschnitt des Gasbehälters liegt dabei vorzugsweise im Bereich von 1/10 bis 1/5.

In einer nicht näher dargestellten Ausführungsform, bei der auf ein separates Projektil gemäß den Fig. 1 und 2 verzichtet und das Projektil durch ein im Wesentlichen als Ganzes aus der Membran herausgebrochenes Teilstück realisiert wird, kann das herauszubrechende Teilstück gegenüber der übrigen Membran verdickt sein. Hierdurch kann, falls erwünscht, eine größere Masse des Projektils erreicht werden. Statt dessen kann die Membran auch insgesamt dicker ausgebildet und mit einer Sollbruchstelle, vorzugsweise einer Ringnut, versehen sein. Die Sollbruchstelle ermöglicht das Ausbrechen des Teilstücks bei dem gewünschten Schwellendruck, der so niedrig ist, dass ein Ausbrechen des Teilstücks ohne die Sollbruchstelle nicht erfolgen würde. Durch beide Maßnahmen kann eine größere Masse des aus der Membran herausgebrochenen Projektils erreicht werden, unabhängig davon, ob die Membran an der Einlassöffnung des Führungskanals vorgesehen ist (hier kann die vorstehend beschriebene Scherwirkung von Abscherkanten zusätzlich genutzt werden) oder ob die Membran an der der Brennkammer abgewandten Seite der Brennkanuner-Auslassöffnung vorgesehen ist. Selbstverständlich können auch beide Maßnahmen kombiniert (unabhängig von der Positionen der Membran) eingesetzt werden.

## Patentansprüche

1. Hybrid-Gasgenerator, insbesondere zum Befüllen eines Gassacks,
a) mit einer Brennkammer (3), in welcher eine vorbestimmte Menge eines Gas erzeugenden Materials (11) enthalten ist und welche eine Brennkammer-Auslassöff nung aufweist,
b) mit einer Aktiviervorrichtung (9) zum Aktivieren des Gas erzeugenden Materials (11) und
c) mit einem Vorratsgas enthaltenden Gasbehälter (5), welcher an seinem rückwärtigen Ende über die im Ausgangszustand abgedichtete Brennkammer-Auslassöffnung mit der Brennkammer (3) verbunden ist und welcher an seinem vorderen Ende zumindest eine im Ausgangszustand mittels einer Auslassmembran (23) abgedichtete Gasgemisch-Auslassöffnung (25) aufweist,
d) wobei das nach dem Aktivieren des Gas erzeugenden Materials (11) in der Brennkammer (3) erzeugte Gas über die Brennkammer-Auslassöffnung ein Projektil (29) beaufschlagt, das durch den Gasdruck beschleunigt wird und die Auslassmembran (23) nach Durchfliegen einer freien Wegstrecke zerstört, wodurch das Gasgemisch bestehend aus dem erzeugten Gas und dem Vorratsgas aus der Auslassöffnung (25) austritt,
e) wobei die Brennkammer-Auslassöffnung über einen Führungskanal (21) vorbestimmter Länge in den Innenraum des Gasbehälters (5) mündet, wobei der Führungskanal (21) so dimensioniert ist, dass das die Brennkammer (3) verlassende Gas zur guten Durchmischung des aus der Brennkammer (3) austretenden Gases mit dem im Gasbehälter (5) befindlichen Gas in Form eines engen, scharf begrenzten Gasstroms in den Gasbehälter (5) eintritt, wobei das Verhältnis des Durchmessers des Führungskanals (21) zum Durchmesser des Gasbehälters im Bereich von 1/10 bis 1/5 liegt, und wobei
f) entweder der Führungskanal (21) im Ausgangszustand mittels einer Membran (31') verschlossen ist, welche so ausgebildet ist, dass zumindest der den Querschnitt des Führungskanals (21) verschließende Teil der Membran (31') bei Überschreiten eines vorbestimmten Schwellendrucks des in der Brennkammer (3) erzeugten Gases im Wesentlichen als Ganzes aus der Membran (31') herausgebrochen wird und als Projektil wirkt,
g) oder das Projektil als im Ausgangszustand separates im Führungskanal (21) vorgesehenes Projektil (29) ausgebildet ist, wobei sich das Projektil (29) im Ausgangszustand um eine vorbestimmte Lauflänge gegenüber der Austrittsöffnung des Führungskanals (21) zurückversetzt im Führungskanal befindet,
und wobei zwischen dem Projektil (29) und der Brennkammer (3) eine Membran (31) vorgesehen ist, welche bei Überschreiten eines vorbestimmten Schwellendrucks des in der Brennkammer (3) erzeugten Gases durch den Druck zerstört wird, wodurch das Projektil (29) sofort mit dem den Schwellendruck überschreitenden Druck des erzeugten Gases beaufschlagt und beschleunigt wird.

2. Gasgenerator nach Anspruch 1, **dadurch gekennzeichnet, dass** das separate Projektil (29) in seinem mit dem Beschleunigungsdruck beaufschlagbaren Ende eine vorzugsweise zentrische oder ringförmige Ausnehmung aufweist, und dass die verbleibende Außenwandung des Projektils (29) so ausgebildet ist, dass sie bei einer Beaufschlagung der Ausnehmung mit dem Beschleunigungsdruck unter elastischer oder plastischer Verformung gegen die Innenwandung des Führungskanals (21) gepresst wird, um eine Dichtwirkung zu erzeugen.

3. Gasgenerator nach Anspruch 1, **dadurch gekennzeichnet, dass** die als Projektil wirkende Membran (31') im Bereich des Querschnitts des Führungskanals (21) eine solche Dicke oder eine gegenüber dem übrigen Bereich der Membran (31') eine Verdickung aufweist, dass der das Projektil bildenden Membranteil eine solche Masse aufweist, dass die kinetische Energie des Projektils beim Auftreffen auf die Auslassmembran (23) zu deren Zerstörung ausreicht.

4. Gasgenerator nach Anspruch 3, **dadurch gekennzeichnet, dass** die als Projektil wirkende Membran (31') am brennkammerseitigen Ende des Führungskanals (21) oder innerhalb des Führungskanals (21) vorgesehen ist, wobei der Bereich der Führungskanals (21) zwischen der Position der Membran (31') und dem Ende des Führungskanals (21) als Lauflänge zur Führung des Projektils dient.

5. Gasgenerator nach einem der Ansprüche 3 oder 4, **dadurch gekennzeichnet, dass** die als Projektil wirkende Membran (31') an ihrer der Brennkammer (3) abgewandten Stirnseite von Abscherkanten (59) beaufschlagt wird.

6. Gasgenerator nach einem der Ansprüche 3 bis 5, **dadurch gekennzeichnet, dass** die als Projektil wirkende Membran (31') an der der Brennkammer (3) abgewandten Stirnseite des Führungskanals (21) oder der Brennkammer-Auslassöffnung vorgesehen ist.

7. Gasgenerator nach einem der Ansprüche 3 bis 6, **dadurch gekennzeichnet, dass** in einer Stirnseite der als Projektil wirkenden Membran (31') Mittel für das Definieren einer ringartig geschlossenen Sollbruchstelle vorgesehen sind, vorzugsweise eine Nut oder Kerbe.

8. Gasgenerator nach Anspruch 6 und 7, **dadurch gekennzeichnet, dass** die Membran (31') mittels einer ringförmigen Schweißnaht (61) mit der Stirnseite des den Führungskanal **(21)** aufweisenden Elements verbunden ist, wobei der innenseitige Randbereich der Schweißnaht (61) die Sollbruchstelle definiert.

9. Gasgenerator nach einem der vorhergehenden Ansprüche, **dadurch gekennzeichnet, dass** der Querschnitt des Führungskanals (21) so festgelegt ist, dass der maximale nach dem Aktivieren des Gas erzeugenden Materials (11) im Gasbehälter (5) auftretende Arbeitsdruck unterhalb eines vorbestimmten Werts liegt, vorzugsweise unter 300 bis 400 bar.

10. Gasgenerator nach einem der vorhergehenden Ansprüche, **dadurch gekennzeichnet, dass** die Lauflänge für das Projektil so bestimmt ist, dass die kinetische Energie des Projektils beim Auftreffen auf die Auslassmembran (23) sicher zu deren Zerstörung ausreicht.

11. Gasgenerator nach einem der vorhergehenden Ansprüche, **dadurch gekennzeichnet, dass** die Auslassmembran (23) so ausgebildet und ausgelegt ist, dass sie auch ohne Zerstörung durch das Projektil bei Überschreiten eines kritischen Drucks des Gemischs aus Vorratsgas und erzeugtem Gas im Gasbehälter (5) zerstört wird.

12. Gasgenerator nach einem der vorhergehenden Ansprüche, **dadurch gekennzeichnet, dass** die Druckfestigkeit, insbesondere die Wandstärke, des Gasbehälters (5) auf den maximalen Arbeitsdruck oder den kritischen Druck unter Berücksichtigung einer Sicherheitsreserve ausgelegt ist.

13. Gasgenerator nach einem der vorhergehenden Ansprüche, **dadurch gekennzeichnet, dass** der Gasbehälter (5) rohrförmig ausgebildet ist.

14. Gasgenerator nach Anspruch 13, **dadurch gekennzeichnet, dass** der Führungskanal (21) in einem scheibenartigen, mit dem betreffenden Ende eines Rohrs verbundenen oder einstückig damit ausgebildeten Endstück (19) vorgesehen ist.

15. Gasgenerator nach Anspruch 14, **dadurch gekennzeichnet, dass** die Brennkammer (3) rohrförmig ausgebildet ist, wobei vorzugsweise ein das Brennkammergehäuse bildender Rohrabschnitt (15) mit dem Endstück des Gasbehälters (5) verbunden oder einstückig damit ausgebildet ist.

16. Gasgenerator nach einem der vorhergehenden Ansprüche, **dadurch gekennzeichnet, dass** die Brennkammer-Austrittsöffnung gegenüber bei der Gaserzeugung entstehenden festen oder flüssigen Partikeln mittels einer Partikelrückhalteeinrichtung (33) abgeschirmt ist, welche in einem vorbestimmten Abstand vor der Brennkammer-Austrittsöffnung angeordnet ist.

17. Gasgenerator nach Anspruch 16, **dadurch gekennzeichnet, dass** die Partikelrückhalteeinrichtung (33) ein siebartig oder filterartig ausgebildetes Abschirmelement (35) aufweist.

18. Gasgenerator nach Anspruch 17, **dadurch gekennzeichnet, dass** das Abschirmelement (35) einen Prallbereich (37) aufweist, welcher die Brennkammer-Auslassöffnung derart abdeckt, dass ein direktes, geradliniges Eintreten von festen oder flüssigen Partikeln in die Brennkammer-Auslassöffnung oder deren direktes Aufschlagen auf die Membran (31, 31') verhindert wird.

19. Gasgenerator nach einem der Ansprüche 16 bis 18, **dadurch gekennzeichnet, dass** zumindest der die Brennkammer-Auslassöffnung umgebende Bereich und/oder der Prallbereich (37) des Abschirmelements, die einem Auftreffen von festen Partikeln ausgesetzt sind, aus einem Material bestehen, in welches die Partikel teilweise eindringen und gefangen bleiben und teilweise, ggf. beim Aufprall zerplatzt, davon abprallen.

## Claims

1. Hybrid gas generator, in particular for filling a gas bag,
a) having a combustion chamber (3) which contains a predetermined amount of a gas-generating material (11) and which has a combustion chamber outlet opening,
b) having an activating device (9) for activating the gas-generating material (11) and
c) having a gas vessel (5) containing a stored gas, which vessel is connected at its rear end to the combustion chamber (3) via the combustion chamber outlet opening, which is sealed off in the initial state, and which vessel has at its front end at least one gas mixture outlet opening (25) which is sealed off by means of an outlet membrane (23) in the initial state,
d) the gas generated in the combustion chamber (3) after the gas-generating material (11) has been activated acting upon a projectile (29) via the combustion chamber outlet opening, which projectile is accelerated by the gas pressure and after it has flown over a free path destroys the outlet membrane (23), whereby the gas mixture consisting of the generated gas and the stored gas escapes from the outlet opening (25),
e) the combustion chamber outlet opening leading into the interior space of the gas vessel (5) via a guide channel (21) of predetermined length, the guide channel (21) being dimensioned such that the gas leaving the combustion chamber (3) enters the gas vessel (5) in the form of a narrow, sharply limited stream of gas for the purpose of good intermixing of the gas escaping from the combustion chamber (3) with the gas situated in the gas vessel (5), the ratio of the diameter of the guide channel (21) to the diameter of the gas vessel being in the range from 1/10 to 1/5, and
f) either the guide channel (21) being closed in the initial state by means of a membrane (31') which is formed such that at least the part of the membrane (31') which closes the cross-section of the guide channel (21) is broken out of the membrane (31') substantially in one piece and acts as a projectile, once a predetermined threshold pressure of the gas generated in the combustion chamber (3) is exceeded,
g) or the projectile being formed as a projectile (29) which is separate in the initial state and provided in the guide channel (21), the projectile (29) being located in the guide channel such that it is set back from the outlet opening of the guide channel (21) by a predetermined barrel length in the initial state,
and a membrane (31) being provided between the projectile (29) and the combustion chamber (3), which membrane, once a predetermined threshold pressure of the gas generated in the combustion chamber (3) is exceeded, is destroyed by the pressure, whereby the projectile (29) is immediately acted upon and accelerated by the pressure of the generated gas which exceeds the threshold pressure.

2. Gas generator according to Claim 1, **characterised in that** the separate projectile (29) has a preferably centric or ring-shaped recess in its end which can be acted upon by the accelerating pressure, and **in that** the remaining outer wall of the projectile (29) is formed such that it is pressed against the inner wall of the guide channel (21) with elastic or plastic deformation when the recess is acted upon by the accelerating pressure, so as to create a sealing effect.

3. Gas generator according to Claim 1, **characterised in that** the membrane (31') acting as a projectile has such a thickness in the region of the cross-section of the guide channel (21) or a thickening as compared with the remaining region of the membrane (31') that the part of the membrane forming the projectile has a mass which is such that the kinetic energy of the projectile is sufficient to destroy the outlet membrane (23) when the projectile hits it.

4. Gas generator according to Claim 3, **characterised in that** the membrane (31') acting as a projectile is provided at the end of the guide channel (21) on the side of the combustion chamber or inside the guide channel (21), the region of the guide channel (21) between the position of the membrane (31') and the end of the guide channel (21) serving as a barrel length for guiding the projectile.

5. Gas generator according to one of Claims 3 and 4, **characterised in that** the membrane (31') acting as a projectile is acted upon by shearing edges (59) on its end side facing away from the combustion chamber (3).

6. Gas generator according to one of Claims 3 to 5, **characterised in that** the membrane (31') acting as a projectile is provided on the end side of the guide channel (21) facing away from the combustion chamber (3) or at the combustion chamber outlet opening.

7. Gas generator according to one of Claims 3 to 6, **characterised in that** means for defining a predetermined breaking point closed in the manner of a ring are provided in an end side of the membrane (31') acting as a projectile, preferably a groove or a notch.

8. Gas generator according to Claim 6 and 7, **characterised in that** the membrane (31') is connected to the end side of the element having the guide channel (21) by means of a ring-shaped weld (61), the inside edge region of the weld (61) defining the predetermined breaking point.

9. Gas generator according to one of the preceding claims, **characterised in that** the cross-section of the guide channel (21) is set such that that the maximum working pressure occurring in the gas vessel (5) after the gas-generating material (11) has been activated is below a predetermined value, preferably under 300 to 400 bar.

10. Gas generator according to one of the preceding claims, **characterised in that** the barrel length for the projectile is determined such that the kinetic energy of the projectile is sufficient to reliably destroy the outlet membrane (23) when the projectile hits it.

11. Gas generator according to one of the preceding claims, **characterised in that** the outlet membrane (23) is configured and designed such that it is destroyed once a critical pressure of the mixture of stored gas and generated gas is exceeded in the gas vessel (5) even without being destroyed by the projectile.

12. Gas generator according to one of the preceding claims, **characterised in that** the pressure resistance, in particular the wall thickness, of the gas vessel (5) is designed for the maximum working pressure or the critical pressure, while allowing for a safety margin.

13. Gas generator according to one of the preceding claims, **characterised in that** the gas vessel (5) is of tubular configuration.

14. Gas generator according to Claim 13, **characterised in that** the guide channel (21) is provided in a disc-like end piece (19) which is connected to the relevant end of a tube or is integrally formed therewith.

15. Gas generator according to Claim 14, **characterised in that** the combustion chamber (3) is of tubular configuration, a tube section (15) which forms the housing of the combustion chamber preferably being connected to the end piece of the gas vessel (5) or being integrally formed therewith.

16. Gas generator according to one of the preceding claims, **characterised in that** the combustion chamber outlet opening is shielded from solid or liquid particles produced when gas is generated by means of a particle-retaining device (33), which is arranged at a predetermined distance in front of the combustion chamber outlet opening.

17. Gas generator according to Claim 16, **characterised in that** the particle-retaining device (33) has a shielding element (35) configured in the manner of a sieve or filter.

18. Gas generator according to Claim 17, **characterised in that** the shielding element (35) has a deflecting region (37) which covers the combustion chamber outlet opening in such a way that a direct, rectilinear entrance of solid or liquid particles into the combustion chamber outlet opening or their direct striking of the membrane (31, 31') is prevented.

19. Gas generator according to one of Claims 16 to 18, **characterised in that** at least the region surrounding the combustion chamber outlet opening and/or the deflecting region (37) of the shielding element, which are subject to being hit by solid particles, consist of a material into which some of the particles penetrate and remain trapped and from which some of the particles rebound, possibly after bursting on impact.

## Revendications

1. Générateur de gaz hybride, en particulier pour le remplissage d'un coussin à gaz,
a) comportant une chambre de combustion (3), qui contient une quantité prédéterminée d'un matériau (11) générant un gaz et qui comporte un orifice de sortie de chambre de combustion,
b) comportant un dispositif d'activation (9) destiné à activer le matériau (11) générant le gaz, et
c) comportant un réservoir de gaz (5), qui contient un gaz de réserve et dont l'extrémité arrière est reliée à la chambre de combustion (3) par l'intermédiaire de l'orifice de sortie de la chambre de combustion, rendu étanche à l'état initial, et qui comporte à son extrémité avant au moins un orifice de sortie du mélange gazeux (25), rendu étanche à l'état initial au moyen d'une membrane de sortie (23),
d) dans lequel le gaz généré dans la chambre de combustion (3) après l'activation du matériau (11) générant le gaz sollicite, par l'intermédiaire de l'orifice de sortie de la chambre de combustion, un projectile (29) qui est accéléré par la pression du gaz et qui détériore la membrane de sortie (23) après avoir parcouru une trajectoire libre, moyennant quoi le mélange gazeux, formé par le gaz généré et le gaz de réserve, sort par l'orifice de sortie (25),
e) dans lequel l'orifice de sortie de la chambre de combustion débouche dans l'espace intérieur du réservoir de gaz (5) par l'intermédiaire d'un canal de guidage (21) de longueur prédéterminée, le canal de guidage (21) étant dimensionné de telle sorte que, en vue d'un bon brassage du gaz sortant de la chambre de combustion (3) avec le gaz contenu dans le réservoir de gaz (5), le gaz sortant de la chambre de combustion (3) pénètre dans le réservoir de gaz (5) sous la forme d'un flux de gaz étroit, délimité avec précision, le rapport entre le diamètre du canal de guidage (21) et le diamètre du réservoir de gaz se situant dans une plage de 1/10 à 1/5, et dans lequel
f) soit le canal de guidage (21) est fermé à l'état initial par une membrane (31'), qui est conçue de telle sorte que, lorsque la pression du gaz généré dans la chambre de combustion (3) atteint une valeur supérieure à la pression seuil prédéterminée, au moins la partie de la membrane (31') obturant la section du canal de guidage (21) est arrachée dans son ensemble de la membrane (31') et agit comme projectile,
g) soit le projectile est réalisé sous forme d'un projectile (29) séparé, prévu à l'état initial dans le canal de guidage (21), ledit projectile (29), à l'état initial, étant décalé vers l'arrière dans le canal de guidage (21) sur une longueur de projection prédéterminée par rapport à l'orifice de sortie du canal de guidage (21),
et une membrane (31) étant prévue entre le projectile (29) et la chambre de combustion (3), laquelle membrane est détériorée sous l'effet de la pression lorsque le gaz généré dans la chambre de combustion (3) atteint une valeur supérieure à une pression seuil prédéterminée, moyennant quoi le projectile (29) est immédiatement sollicité et accéléré par la pression du gaz généré, supérieure à la pression seuil.

2. Générateur de gaz selon la revendication 1, **caractérisé en ce que** le projectile (29) séparé comporte un évidement, de préférence centré ou annulaire, dans son extrémité propre à être sollicitée par la pression d'accélération, et **en ce que** la paroi extérieure restante du projectile (29) est réalisée de telle sorte que, lors d'une sollicitation de l'évidement par la pression d'accélération, ladite paroi est pressée moyennant une déformation élastique ou plastique contre la paroi intérieure du canal de guidage (21), afin de produire une action d'étanchéité.

3. Générateur de gaz selon la revendication 1, **caractérisé en ce que** la membrane (31') agissant comme projectile comporte, dans la zone de la section du canal de guidage (21), une épaisseur ou un épaississement par rapport au reste de la membrane (31') de telle sorte que la partie de membrane formant le projectile a une masse telle que, lorsque ledit projectile vient heurter contre la membrane de sortie (23), l'énergie cinétique du projectile est suffisante pour détériorer celle-ci.

4. Générateur de gaz selon la revendication 3, **caractérisé en ce que** la membrane (31') agissant comme projectile est prévue au niveau de l'extrémité du canal de guidage (21), du côté chambre de combustion, ou à l'intérieur du canal de guidage (21), la zone du canal de guidage (21), située entre la position de la membrane (31') et l'extrémité du canal de guidage (21), constituant une longueur de course de guidage du projectile.

5. Générateur de gaz selon la revendication 3 ou 4, **caractérisé en ce que** la membrane (31') agissant comme projectile est sollicitée sur sa face frontale, opposée à la chambre de combustion (3), par des arêtes de cisaillement (59).

6. Générateur de gaz selon l'une quelconque des revendications 3 à 5, **caractérisé en ce que** la membrane (31') agissant comme projectile est prévue sur la face frontale du canal de guidage (21), opposée à la chambre de combustion (3), ou de l'orifice de sortie de la chambre de combustion.

7. Générateur de gaz selon l'une quelconque des revendications 3 à 6, **caractérisé en ce que**, dans une face frontale de la membrane (31') agissant comme projectile, il est prévu des moyens destinés à définir une zone destinée à la rupture, fermée en forme d'anneau, de préférence une rainure ou gorge.

8. Générateur de gaz selon les revendications 6 et 7, **caractérisé en ce que** la membrane (31') est assemblée par un cordon de soudure (61) annulaire avec la face frontale de l'élément comportant le canal de guidage (21), la zone de bordure du côté intérieur du cordon de soudure (61) définissant la zone destinée à la rupture.

9. Générateur de gaz selon l'une quelconque des revendications précédentes, **caractérisé en ce que** la section du canal de guidage (21) est définie de telle sorte que la pression de travail maximale, produite dans le réservoir de gaz (5) après l'activation du matériau (11) générant le gaz, se situe en dessous d'une valeur prédéterminée, de préférence en dessous de 300 à 400 bar.

10. Générateur de gaz selon l'une quelconque des revendications précédentes, **caractérisé en ce que** la longueur de course du projectile est définie de telle sorte que l'énergie cinétique du projectile est suffisante pour détériorer de manière sûre la membrane de sortie (23) au moment de l'impact du projectile sur celle-ci.

11. Générateur de gaz selon l'une quelconque des revendications précédentes, **caractérisé en ce que** la membrane de sortie (23) est réalisée et conçue de telle sorte que, même sans la détérioration provoquée par le projectile, elle est détériorée lorsque le mélange formé dans le réservoir de gaz (5) par le gaz de réserve et le gaz généré atteint une valeur supérieure à une pression critique.

12. Générateur de gaz selon l'une quelconque des revendications précédentes, **caractérisé en ce que** la résistance à la pression, en particulier l'épaisseur de paroi, du réservoir de gaz (5) est basée sur la pression de travail maximale ou la pression critique en tenant compte d'une réserve de sécurité.

13. Générateur de gaz selon l'une quelconque des revendications précédentes, **caractérisé en ce que** le réservoir de gaz (5) est un réservoir tubulaire.

14. Générateur de gaz selon la revendication 13, **caractérisé en ce que** le canal de guidage (21) est prévu dans une pièce d'extrémité (19) en forme de disque, assemblée à l'extrémité concernée d'un tube ou réalisée d'un seul tenant avec celle-ci.

15. Générateur de gaz selon la revendication 14, **caractérisé en ce que** la chambre de combustion (3) est une chambre tubulaire, un tronçon de tube (15), formant le carter de la chambre de combustion, étant de préférence assemblé à la pièce d'extrémité du réservoir de gaz (5) ou réalisé d'un seul tenant avec celle-ci.

16. Générateur de gaz selon l'une quelconque des revendications précédentes, **caractérisé en ce que** l'orifice de sortie de la chambre de combustion est protégé contre les particules solides ou liquides, générées lors du développement du gaz, au moyen d'un dispositif de retenue des particules (33) qui est agencé à une distance prédéterminée en amont de l'orifice de sortie de la chambre de combustion.

17. Générateur de gaz selon la revendication 16, **caractérisé en ce que** le dispositif de retenue des particules (33) comporte un élément de protection (35) en forme de tamis ou de filtre.

18. Générateur de gaz selon la revendication 17, **caractérisé en ce que** l'élément de protection (35) comporte une zone de rebondissement (37), qui masque l'orifice de sortie de la chambre de combustion de manière à empêcher une pénétration directe en ligne droite de particules solides ou liquides dans l'orifice de sortie de la chambre de combustion ou leur impact direct sur la membrane (31, 31').

19. Générateur de gaz selon l'une quelconque des revendications 16 à 18, **caractérisé en ce qu'**au moins la zone entourant l'orifice de sortie de la chambre de combustion et/ou la zone de rebondissement (35) de l'élément de protection, lesquelles sont exposées à l'impact des particules solides, sont réalisées dans un matériau dans lequel les particules en partie pénètrent et restent retenues et en partie rebondissent sur celui-ci, et le cas échéant éclatent au moment de l'impact.
